# EUROPÄISCHE PATENTSCHRIFT

(11) **EP 4 042 034 B1**
(45) Veröffentlichungstag und Bekanntmachung des Hinweises auf die Patenterteilung: **22.07.2026**
(21) Anmeldenummer: 20789958.4
(22) Anmeldetag: 09.10.2020
(51) Int. Cl.: F16D 65/12

(54) **INNENBELUEFTETER ROTOR**
INTERNALLY VENTILATED ROTOR
ROTOR À VENTILATION INTERNE

(30) Priorität: 11.10.2019 DE 102019215662
(43) Veröffentlichungstag der Anmeldung: 17.08.2022
(73) Patentinhaber: Brembo SGL Carbon Ceramic Brakes GmbH, 86405 Meitingen (DE)
(72) Erfinder: MARTEL, Viktor, 86405 Meitingen (DE)
(74) Vertreter: Fabiano, Piero
(86) Internationale Anmeldenummer: PCT/EP2020/078511
(87) Internationale Veröffentlichungsnummer: WO 2021/069725

(56) Entgegenhaltungen:
- EP-A2- 1 300 376
- EP-A2- 3 093 517
- WO-A1-2015/179420
- DE-A1- 102013 201 303
- GB-A- 2 444 927
- GB-A- 2 543 020

## Beschreibung

Die Erfindung betrifft einen innenbelüfteten Rotor und die zu dessen Herstellung verwendbaren Fügekerne sowie eine Verwendung des innenbelüfteten Rotors .

Es ist bekannt, dass die Lebensdauer von Scheibenbremsenkomponenten signifikant gesteigert werden kann, wenn durch eine Verbesserung der Kühlleistung eine geringe Betriebstemperatur der Scheibenbremse erreicht wird. Zur Verbesserung der Kühlleistung von Scheibenbremsen wurden im Stand der Technik dementsprechend viele Vorschläge gemacht.

Die Offenlegungsschrift DE 1O 2017 206 249 A1 beschreibt eine flüssigkeitsgekühlte Bremsscheibe für eine Scheibenbremse. Sie ist aus Metall durch 3D-Druck gefertigt und weist keine Innenbelüftung auf.

Hochfeste faserverstärkte Bremsscheiben sind häufig innenbelüftet. Sie weisen einen oder mehrere Kühlkanäle auf. Die Kühlung erfolgt, indem Wärme auf die Luft übertragen wird, die durch die Kanäle strömt.

Im Stand der Technik wurden verschiedene innenbelüftete Rotoren für Scheibenbremsen vorgeschlagen. So betrifft DE 601 16 780 T2 ein Verfahren zur Herstellung eines Bremsrings, der Belüftungskanäle aufweist und aus einem keramischen Werkstoff wie zum Beispiel C/SiC besteht. Die Belüftungskanäle werden mit Hilfe eines Kerns aus einem Metallwerkstoff gebildet, der herausgeschmolzen wird.

Die Druckschrift EP 3093517 A2 betrifft eine Bremsscheibe aus Carbon-Keramik, die einen Trägerkörper mit Kühlkanälen im Mittelabschnitt und Reibschichten umfasst. Der Trägerkörper besteht aus einer Vielzahl von Schichten, die den Komponenten der Reibschichten ähnlicheren Komponenten aufweisen. Der Trägerkörper kann aus zwei oder mehreren Schichten bestehen. Die GB 2444927 A betrifft eine belüftete Bremsscheibe, die aus einer Vielzahl von porösen Körpern gebildet ist. Die porösen Körper sind so angeordnet, dass jede Flügelformation mit mindestens einem anderen porösen Körper in Kontakt ist, um einen Belüftungsraum in der gebildeten Bremsscheibe zu definieren. Die porösen Körper sind mittels eines keramischen oder anderen Materials, das in den Poren der porösen Körper angeordnet ist, miteinander verbunden.

In der Patentschrift DE 101 64 627 C1 wird vorgeschlagen, im Zuge des Herstellungsverfahrens zur Erwärmung elektrischen Strom durch die pressfähige Masse oder den Grünkörper, sowie durch mindestens einen Formkern zu leiten.

In der Offenlegungsschrift DE 198 34 571 A1 wird vorgeschlagen, einen metall- bzw. siliciumhaltigen Kern beizugeben, welcher bei der Schmelzinfiltration als Metall- bzw. Siliciumquelle verwendet wird.

Die Patentschrift DE 102 34 400 B3 betrifft ein Verfahren zur Herstellung von Hohlkörpern aus faserverstärkten keramischen Materialien, wobei kompressible Kerne verwendet werden. Beim Verpressen mit pressfähigem Bindemittel und Faserstoff enthaltender Masse werden die Kerne zumindest in Pressrichtung um mindestens 5 % komprimiert. Die Kerne bestehen aus einem Material, das bei einer nachgelagerten Carbonisierung in einer nicht oxydierenden Atmosphäre bei einer Temperatur von ca. 750 °C bis ca. 1100 °C pyrolysiert, oder unter Volumenschwindung zumindest teilweise pyrolysiert wird. Es ist beschrieben, dass dabei mehrschichtige Kerne aus geschäumten Polymeren in sandwichartigen Strukturen eingesetzt werden können.

Die nach den oben zitierten Veröffentlichungen erhältlichen, innenbelüfteten Rotoren haben zwar herausragende Eigenschaften. Jedoch besteht insbesondere hinsichtlich deren Kühlleistung weiteres Verbesserungspotenzial. Wegen des Herstellungsprozesses sind die zwischen den Kühlkanälen bestehenden Verbindungsbereiche, welche die Reibscheiben verbinden, massiv. Sie weisen dieselbe Zusammensetzung auf, wie die Reibscheiben, da dieselbe schwer formbare Masse zur Herstellung der späteren Reibscheiben und zur Herstellung der Verbindungsbereiche verwendet wird. Die Masse wird während des Herstellungsprozesses in die Aussparungen des Kerns gefüllt, in denen die Verbindungsbereiche entstehen. Die Aussparungen müssen sehr breit ausgebildet sein, damit die Masse den Bereich trotz ihrer schweren Formbarkeit gut ausfüllen kann. Außerdem müssen Pyrolyserückstände der Kerne gegebenenfalls entfernt werden und führen zu einer nachteilhaften Oberflächenbeschaffenheit.

Der vorliegenden Erfindung liegt die Aufgabe zugrunde, einen innenbelüfteten Rotor für eine Scheibenbremse bereitzustellen, der die Lebensdauer des Bremssystems, insbesondere der Bremsscheibe und der Bremsbeläge, steigert und zugleich einfach herzustellen ist.

Diese Aufgabe wird durch einen innenbelüfteten Rotor mit den Merkmalen des Anspruchs 1, einen Fügekern mit den Merkmalen des Anspruchs 11 und eine Verwendung des innenbelüfteten Rotors nach dem Anspruch 13 gelöst. Erfindungsgemäß umfasst der innenbelüftete Rotor zwei miteinander verbundene Scheibenelemente und einen Fügekern mit einer innenbelüfteten Kühlzone und einem Kühlelement zwischen den Scheibenelementen, wobei das Kühlelement die Scheibenelemente verbindet, damit Wärme vom Kühlelelement direkt auf die in der Kühlzone befindliche Luft übertragen wird, und wobei die Scheibenelemente und das Kühlelement Fasern enthält, wobei das Kühlelement einen geringeren mittleren Volumenanteil an Fasern aufweist, als die Scheibenelemente, und die Kühlzone in radialer Richtung nach innen und außen hin offen ist, so dass Luft durch die Kühlzone strömen kann, dadurch gekennzeichnet dass der Fügekern ein Gefüge aufweist, das durch additive Fertigung erhaltet ist,

In den nicht erfindungsgemäßen Ausführungsformen umfasst der innenbelüftete Rotor nur ein Scheibenelement, das zwischen Kühlelementen angeordnet ist. Auf den beiden Oberflächen des Scheibenelements ist dann je mindestens ein Kühlelement angeordnet, wobei die eine Kühlzone auf einer Seite des Scheibenelements vorliegt und eine zweite Kühlzone auf der anderen Seite des Scheibenelements vorliegen kann.

Vorzugsweise istder erfindungsgemäße innenbelüftete Rotor ein siliciumcarbidkeramischer innenbelüfteter Rotor. Siliciumcarbidkeramisch bedeutet im Zusammenhang mit der vorliegenden Erfindung, dass der Rotor 10 - 90 Gew. % SiC enthält. Er kann außerdem z.B. 5 - 40 Gew.-% freies Silizium enthalten. Die Massenanteile an Si und SiC lassen sich bestimmen nach DIN EN ISO 21068-2.

Das Scheibenelementvolumen kann z.B. 5-95 % des gesamten Volumens des Rotors betragen. Das Kühlelementvolumen kann z.B. 5-95 % des gesamten Volumens des Rotors betragen. In das Scheibenelementvolumen geht das Volumen sämtlicher Scheibenelemente des Rotors ein, wobei gegebenenfalls vorhandene Reibbeläge als Teil des Scheibenelements angesehen werden. In das Kühlelementvolumen geht das Volumen sämtlicher Kühlelemente des Rotors ein, ohne die zur Innenbelüftung dienenden Hohlräume mit einzubeziehen. Als gesamtes Volumen des Rotors wird die Summe aus Kühlelementvolumen und Scheibenelementvolumen angesehen.

Erfindungsgemäß weist das Kühlelement einen geringeren mittleren Volumenanteil an Fasern auf, als die Scheibenelemente. Dies bedeutet, dass das Kühlelement einen geringeren mittleren Volumenanteil an Fasern aufweist, als das erste Scheibenelement und dass das Kühlelement auch einen geringeren mittleren Volumenanteil an Fasern aufweist, als das zweite Scheibenelement.

Dadurch sind die Elemente des Rotors auf deren spezifische mechanische Belastung beim Bremsen hin optimiert. Zum einen drückt der Sattel mit den Belägen die Scheibe zusammen, dabei entstehen (nur) Druckspannungen. Zum anderen drückt der Sattel (aufgrund mehrerer verteilter Kolben) ungleichmäßig an mehreren Punkten axial auf die Scheibe, die fest mit der Achse verbunden ist. Dadurch kommt es zu einer Biegung der Scheibe. Die höchsten Spannungen treten dabei an den Außenflächen der Scheibe auf (höchste Verformung), wobei an einer Außenfläche Druck und an der anderen Außenfläche Zug vorherrscht. Im Inneren (wo sich die Kühlzone befindet) sind die Verformungen geringer, weshalb dort auch die Spannungen geringer sind. Den unterschiedlichen Spannungen trägt der nun vorgeschlagene Rotor Rechnung. Der Faseranteil ist dort geringer, wo die Spannungen geringer sind und dort höher, wo die Spannungen höher sind. Die Bruchdehnung wird dadurch an die Spannungen bzw. Verformungen angepasst, die in den unterschiedlichen Bereichen des Rotors beim Bremsen in der Praxis auftreten.

Ein geringerer Faseranteil im Kühlelement bewirkt eine gute und im Wesentlichen richtungsunabhängige Wärmeleitfähigkeit. In den Scheibenelementen ist die Wärmeleitfähigkeit aufgrund deren höherem Faseranteil insgesamt geringer. Dennoch fließt die Wärme sehr gut aus dem Rotor ab. In axialer Richtung hat das schlechter wärmeleitende Scheibenelement einen sehr großen Querschnitt, der für die Wärmeleitung in axialer Richtung zur Verfügung steht. Nach dem Übertritt ins Kühlelement wird zwar der Querschnitt kleiner, da die Kühlzone einen Teil des Querschnitts einnimmt. Jedoch steht dann für den Wärmefluss in axialer Richtung das besser wärmeleitende faserärmere Kühlelement zur Verfügung. Insgesamt sind die Faseranteile im erfindungsgemäßen Rotor also nicht nur auf die mechanischen Belastung hin sondern auch auf die thermischen Belastung hin optimiert.

Vorzugsweise weist das Kühlelement einen höheren mittleren Massenanteil an SiC auf, als die Scheibenelemente. Der jeweilige Massenanteil an SiC lässt sich bestimmen nach DIN EN ISO 21068-2

Die Erfindung ist hinsichtlich der zwischen den Scheibenelementen bestehenden Verbindung(en) nicht beschränkt, sofern die Verbindung(en) den beim Bremsen auf den Rotor wirkenden Kräften standhält bzw. standhalten. Das Kühlelement ist an mindestens einem Scheibenelement, vorzugsweise an beiden Scheibenelementen angeordnet. Es befindet sich zwischen den Scheibenelementen.

Vorzugsweise verbindet das Kühlelement die Scheibenelemente. Dies bewirkt zugleich eine Verbesserung der Wärmeabfuhr und eine Steigerung der mechanischen Stabilität des Rotors. Denn es steht eine größere Kühloberfläche zur Verfügung, wenn ein oder mehrere Kühlelemente die innenbelüftete Kühlzone überbrücken. Die direkte Übertragung von Wärme vom Kühlelement auf die in der Kühlzone befindliche Luft erfolgt dann besonders effizient. Die mechanische Stabilität des Rotors wird ebenfalls erhöht, da verbindende Kühlelemente mindestens einen Teil der Kräfte aufnehmen, die beim Bremsen durch die Bremsbeläge auf den Rotor übertragen werden. Letztlich kann ein Rotor, bei dem ein oder mehrere Kühlelemente die Scheibenelemente verbinden, kleiner ausgelegt werden, da dieselbe Wärmeabfuhr und dieselbe mechanische Stabilität dann mit geringeren Wandstärken der Scheibenelemente erzielt werden kann. Somit können noch leichtere leistungsfähige Bremssysteme bereitgestellt werden.

Die im vorstehenden Absatz angegebenen Vorteile sind dann besonders stark ausgeprägt, wenn in dem Teilbereich des Rotors, an dem die Bremsklötze anliegen, die Verbindung(en) zwischen den Bremsschreiben nicht weit voneinander beabstandet sind. Der Teilbereich des Rotors, an dem die Bremsklötze anliegen, lässt sich bei jedem Rotor mit Hilfe eines Hohlzylinders abgrenzen, dessen Achse mit der Rotationsachse des Rotors zusammen fällt. Der Abstand der inneren Manteloberfläche entspricht dem kleinsten Abstand, den der Bremsbelag zur Rotationsachse einnimmt. Der Abstand der äußeren Manteloberfläche entspricht dem größten Abstand, den der Bremsbelag zur Rotationsachse einnimmt.

Hinsichtlich des Verlaufs des Kühlelements von einem Scheibenelement zum anderen Scheibenelement bestehen keine Einschränkungen. Wenn zusätzliche Verbindungen zwischen den Scheibenelementen bestehen, wie z.B. die unten näher beschriebenen Scheibenelementverbindungsbereiche, können diese Verbindungsbereiche so ausgebildet sein, dass der Rotor allein wegen dieser Verbindungsbereiche ausreichend stabil wäre. Dann kann die Form jedes Kühlelements ohne Rücksicht auf die mechanischen Eigenschaften des Kühlelements im Hinblick auf eine möglichst hohe Kühlleistung optimiert werden. Prinzipiell kann das Kühlelement dann jede Form aufweisen, die zwischen die Scheibenelemente passt. Der Fachmann würde dann zur Optimierung der Wärmeabfuhr jedoch eine Form mit besonders hoher, zum innenbelüfteten Bereich hin orientierter Oberfläche wählen, da dies für eine höhere Wärmeabfuhr sorgt. Es ist allgemein bevorzugt, wenn das Kühlelement mindestens einen von einem Scheibenelement zum anderen Scheibenelement gerade verlaufenden Abschnitt aufweist, der parallel oder geneigt zur Rotationsachse ausgerichtet ist. Dies bewirkt, dass das Kühlelement den mechanischen und thermischen Belastungen lastgerecht widerstehen kann. Dann kann auf zusätzliche Verbindungen zwischen den Scheibenelementen, wie z.B. die unten näher beschriebenen Scheibenelementverbindungsbereiche ganz oder teilweise verzichtet werden und dennoch eine herausragende mechanische Belastbarkeit des Rotors erreicht werden. Ein von einem Scheibenelement zum anderen Scheibenelement gerade verlaufender Abschnitt liegt vor, wenn sich mindestens eine Gerade finden lässt, die von einem Übergang des Abschnitts in das eine Scheibenelement bis zum Übergang des Abschnitts in das andere Scheibenelement vollständig innerhalb des Abschnitts verläuft. Parallel zur Rotationsachse ist der Abschnitt ausgerichtet, wenn sich eine solche Gerade finden lässt, die außerdem parallel zur Rotationsachse verläuft. Geneigt zur Rotationsachse ist der Abschnitt ausgerichtet, wenn sich mindestens eine Gerade finden lässt, die von einem Übergang des Abschnitts in das eine Scheibenelement bis zum Übergang des Abschnitts in das andere Scheibenelement vollständig innerhalb des Abschnitts verläuft, sich aber keine solche Gerade finden lässt, die außerdem parallel zur Rotationsachse verläuft.

Das Kühlelement (3) umfasst bei erfindungsgemäß besonders bevorzugten Rotoren ein durch additive Fertigung, insbesondere durch 3D-Druck, z.B. durch Binder Jetting, erhältliches Gefüge. Dabei handelt es sich bevorzugt um ein kohlenstoffbasiertes Gefüge. Dies bewirkt, dass die Geometrie der innenbelüfteten Kühlzone im Hinblick auf die Wärmeabfuhr optimiert werden kann, ohne Rücksicht auf fertigungsbedingte Einschränkungen abtragender Herstellungsverfahren nehmen zu müssen. Dies ermöglicht die wirtschaftliche Generierung filigraner Strukturen mit Hinterschneidungen in alle Raumrichtungen und von offenporigen Strukturen für den Durchfluss von Fluiden, wie sie auch bei offenporigen aufgeschäumten Materialien zu finden sind. Der Fachmann bedient sich hierzu der Computer Aided Optimization (CAO), insbesondere der computergestützten Topologieoptimierung. Ein solches Gefüge des Kühlelements wird auf unterschiedlichste Weise erhalten, z.B. wenn das in WO 2017/089494 A1 beschriebene Verfahren zur Herstellung erfindungsgemäßer Rotoren abwandelt wird. Dabei wird gemäß WO 2017/089494 A1, Anspruch 1, Schritte a) bis d) ein Grünkörper mit der gewünschten Form des Kühlelements eines erfindungsgemäßen Rotors hergestellt. Der Grünkörper kann in jeder beliebigen Form hergestellt werden, z.B. in der Form eines Stäbchens, eines Rippentragwerks, eines Gitters, eines Stabtragwerks, einer räumlichen Fachwerkstruktur oder in der Form des weiter unten näher beschriebener Fügekerns, der ebenfalls Gegenstand der vorliegenden Erfindung ist.

Je nach der Form des gemäß WO 2017/089494 A1, Anspruch 1, Schritte a) bis d) hergestellten Grünkörpers, kann nun unterschiedlich weiterverfahren werden, um einen erfindungsgemäßen Rotor zu erhalten.

Wenn der gemäß WO 2017/089494 A1, Anspruch 1, Schritte a) bis d) gebildete Grünkörper ein ebenfalls erfindungsgemäßer Fügekern ist, kann der Grünkörper nach dem Verfahren weiterverarbeitet werden, das in DE 102 34 400 B3 beschrieben ist. Im Verfahren der DE 102 34 400 B3 wird der erfindungsgemäße Fügekern an Stelle des dort beschriebenen Kerns eingesetzt und der erfindungsgemäße Rotor gemäß Schritten zwei, drei, vier, fünf, sechs der Ansprüche 1, 2 und 8 von DE 102 34 400 B3 erhalten. In Schritt sechs wird allerdings auch das auf den Fügekern zurückgehende Material mit Silicium infiltriert.

Wenn der Grünkörper kein erfindungsgemäßer Fügekern ist, sondern z.B. ein Stäbchen, ein Rippentragwerk, ein Gitter, ein Stabtragwerk oder eine räumliche Fachwerkstruktur ist, kann der Grünkörper nicht im Verfahren der DE 102 34 400 B3 an Stelle des Kerns eingesetzt werden. Stattdessen werden dann Scheibenelementgrünlinge aus der in DE 102 34 400 B3 beschriebenen Masse gebildet und ausgehärtet. Auf einer Seite von einer der ausgehärteten Scheibenelementgrünlinge werden die gemäß WO 2017/089494 A1, Anspruch 1, Schritte a) bis d) gebildeten Grünkörper aufgebracht, z.B. mit einem Phenolharz aufgeklebt. Die Grünkörper können auch teilweise in die Schiebenelementgrünlinge eingebracht werden, z.B. können die Grünkörper in die Scheibenelementgrünlinge eingepresst werden, wenn die Scheibenelementgrünlinge noch nicht vollständig ausgehärtet sind. Auf die aufgebrachten Grünkörper wird der andere Scheibenelementgrünling aufgebracht, z.B. mit einem Phenolharz aufgeklebt. Anschließend wird carbonisiert und siliziert, so wie in WO 2017/089494 A1, Anspruch 1, zu Schritten e) und f) beschrieben.

Alternativ zum 3D-Druck, z.B. Binder Jetting, können z.B. Selective Laser Sintering (SLS) oder Selective Laser Melting (SLM) angewendet werden.

Erfindungsgemäß bevorzugt umfasst die Kühlzone (1) einen Kanal, der durch das Kühlelement (3) von einer zur Rotationsachse näheren Kühlelementöffnung (5) zu einer von der Rotationsachse weiter entfernten Kühlelementöffnung (6) verläuft. Dies bewirkt, dass die Oberfläche des gesamten Kanals (und gegebenenfalls auch die Oberfläche der gesamten innenbelüfteten Kühlzone), die durch das Fertigungsverfahren (z.B. 3D-Druck) gesteuerte Oberflächeneigenschaften erhält und die wärmeableitenden Eigenschaften entsprechend verbessert werden können.

Erfindungsgemäße Rotoren können eine Kühlstruktur aufweisen, wie z.B. die oben im Zusammenhang mit der additiven Fertigung und 3D-Druck schon beschrieben Stabtragwerke, Rippentragwerke, und/oder Gitter. Die Oberfläche der Kühlstruktur kann eine Freiformfläche aufweisen. Die Kühlstruktur kann z.B. eine Gyroidstruktur sein. Unter einer Freiformfläche wird eine Fläche verstanden, die z.B. mehrfach gekrümmt ist. Der Begriff Gitter soll hier dreidimensionale Gitter ebenso umfassen, wie im Wesentlichen zweidimensionale Gitter. Eine Form von Gitter weist eine Vielzahl von Kanälen, z.B. runden Kanälen, auf, die in radialer Richtung nach innen und außen hin offen sind. Die Kühlstruktur ist jedoch nicht auf Stabtragwerke, Rippentragwerke, und/oder Gitter beschränkt. Jedes Gebilde aus einer Vielzahl von Stäben, Rippen und/oder Gittern, die chaotisch oder geordnet angeordnet sind, stellt eine Kühlstruktur dar. Die Stäbe, Rippen und/oder Gitter, insbesondere die Stäbe können sich gegenseitig kreuzen. Mit Kühlstruktur ist insbesondere jede regelmäßige Struktur gemeint, in der sich die in einem Volumenelement vorliegenden Strukturbereiche in einem anderen Volumenelement der Kühlstruktur identisch oder spiegelverkehrt wiederfinden. Mit derartigen, insbesondere mit Hilfe von additiver Fertigung bzw. 3D-Druck erhältlichen Kühlstrukturen, lassen sich in der innenbelüfteten Kühlzone besonders große Oberflächen bereitstellen und dadurch die Wärmeableitung weiter verbessern. Beispielsweise kann die Kühlstruktur eine Gitterträgerstruktur sein, die zwei zueinander parallel verlaufende Stäbe umfasst, welche zwei weitere, zueinander parallel verlaufende Stäbe in Kreuzungspunkten kreuzen. Alternativ kann die Kühlstruktur eine räumliche Fachwerkstruktur sein. Als räumliche Fachwerkstruktur wird jede Struktur angesehen, bei der Stäbe dreieckig angeordnet sind, wobei ein Teil der Stäbe (insbesondere die als Gurte fungierenden Stäbe) flächig ausgebildet sein können. Durch eine filigrane Ausgestaltung der Kühlstrukturen kann die Oberfläche erhöht und die Turbulenzen und der damit verbundene Wärmeeintrag in die durchströmende Luft gesteigert werden.

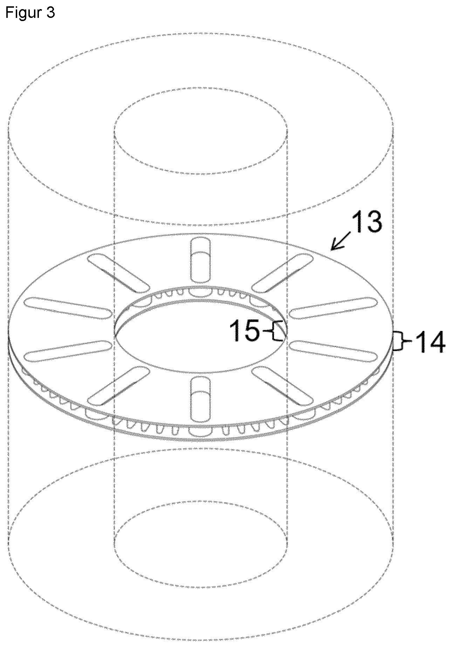

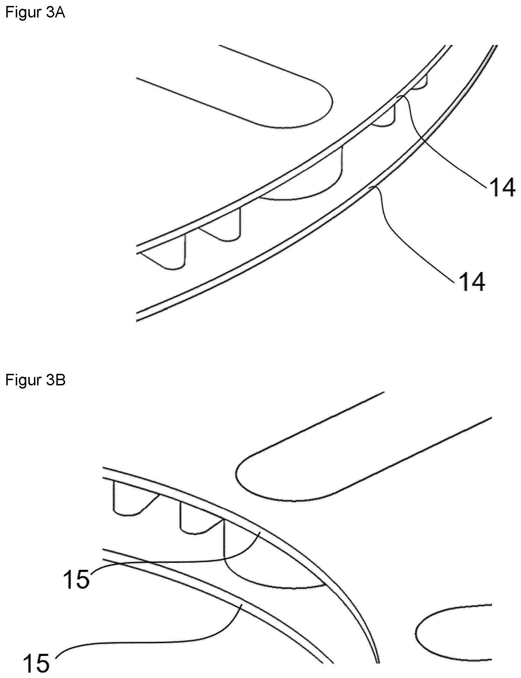

Die Kühlstruktur kann vollständig vom Kühlelement umfasst sein und sich z.B. von einer Wand des Kühlelements zu einer anderen Wand des Kühlelements erstrecken, wobei das Kühlelement über je eine der Wände mit je einem der Scheibenelemente verbunden ist. Dies ermöglicht eine besonders einfache Fertigung des Rotors, da der Fügekern dann an Stelle des in DE 102 34 400 B3 beschriebenen Kerns eingesetzt werden kann. Einen solchen Rotor erhält man, wenn man zur Herstellung des Rotors einen erfindungsgemäßen, z.B. mit Hilfe von 3D-Druck erzeugten Fügekern verwendet, wie er beispielhaft in Fig. 3 gezeigt ist.

Hierin beschriebene Fügekerne sind bevorzugt mit Hilfe von 3D-Druck erhältlich oder wenigstens zum Teil durch 3D-Druck gebildet.

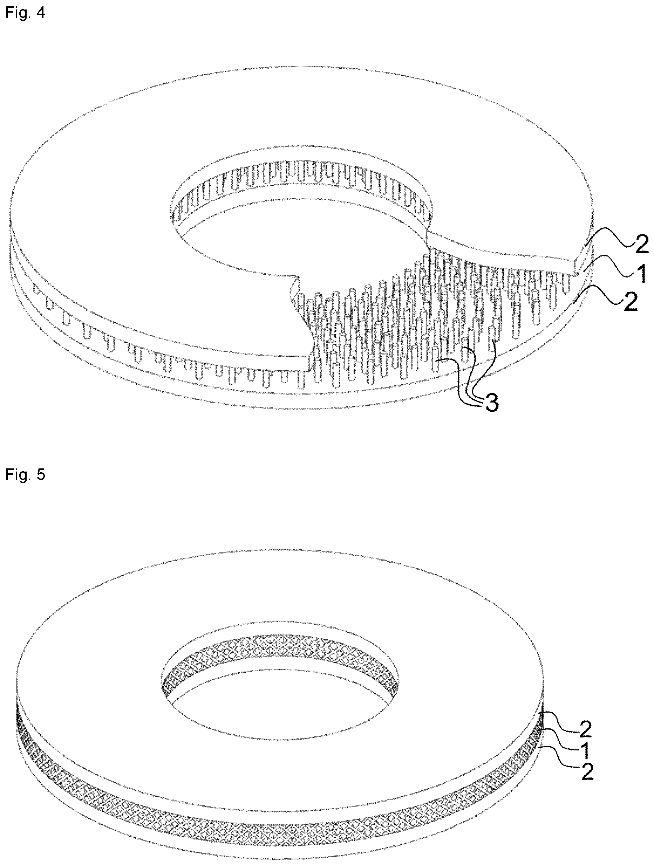

Alternativ kann die Kühlstruktur unter Beteiligung von einer Vielzahl von Kühlelementen und den beiden Scheibenelementen gebildet sein, wobei die Kühlelemente die Scheibenelemente verbinden. Beispielsweise können die Scheibenelemente die Gurte auf den beiden Seiten eines Stabtragwerks, z.B. Fachwerks, und die Kühlelemente die verbindenden Stäbe sein. Dies ist in Figuren 4 und 5 beispielhaft für ein Stabtragwerk mit einer Vielzahl parallel zueinander verlaufender Stäbe gezeigt.

Bei bestimmten Rotoren können ein Teil der Kühlstrukturen vollständig von einem Kühlelement umfasst sein und ein anderer Teil der Kühlstrukturen unter Beteiligung von einer Vielzahl von Kühlelementen und den beiden Scheibenelementen gebildet sein.

Das Verhältnis der Innenoberfläche des Rotors zur Außenoberfläche des Rotors kann mindestens 1:1, vorzugsweise mindestens 1,5:1, weiterhin bevorzugt mindestens 2,5:1, besonders bevorzugt mindestens 4:1, äußerst bevorzugt mindestens 8:1 betragen. Insbesondere durch 3D-Druck lassen sich Kühlstrukturen mit extrem hohen Oberflächen bilden, so dass das heute im Motorsportbereich erreichte Verhältnis der Innenoberfläche zur Außenoberfläche von über 5 zu 1 durch die vorliegende Erfindung erreicht oder sogar überschritten werden kann. Die Innenoberfläche des Rotors ist die zur innenbelüften Kühlzone hin orientierte Oberfläche des Rotors. Sie steht zur Kühlung zur Verfügung. Die Außenoberfläche des Rotors ist die Summe der beiden Oberflächen der beiden im Wesentlichen parallel zueinander verlaufenden, ebenen, nach außen hin orientierten Oberflächen des Rotors. Die Kühlwirkung der innenbelüfteten Kühlzone wird dadurch weiter gesteigert, so dass die Rotoren und auch die Bremseinheiten insgesamt noch kleiner und leichter ausgelegt werden können.

Der Fachmann kann experimentell ermitteln, welche Minimalabstände bzw. -durchmesser in den Kühlstrukturen eingehalten werden müssen, damit die in der Kühlstruktur bestehenden Hohlräume sich bei den jeweiligen Bedingungen der Infiltration mit flüssigem Silicium nicht füllen. Der kleinste Abstand zweier an einen Hohlraum angrenzender Kühlstrukturbereiche beträgt vorzugsweise mehr als 2 mm, da die sich die Neigung van Silicium, die Hohlräume zu füllen, mit zunehmendem Abstand verringert.

Der innenbelüfteter Rotor kann einen Scheibenelementverbindungsbereich aufweisen, der die Scheibenelemente verbindet, wobei der mittlere Volumenanteil an Fasern im Scheibenelementverbindungsbereich dem mittleren Volumenanteil an Fasern der Scheibenelemente entspricht. Die Angabe, dass der mittlere Volumenanteil an Fasern im Scheibenelementverbindungsbereich dem mittleren Volumenanteil an Fasern der Scheibenelemente entspricht, bedeutet, dass beide mittleren Volumenanteile an Fasern sich höchstens um den Faktor 1,5 unterscheiden. D.h. der eine mittlere Volumenanteil an Fasern ist höchstens 1,5 mal so hoch, als der andere mittlere Volumenanteil an Fasern. Solche Scheibenelementverbindungbereiche können mit Hilfe des in Fig. 3 gezeigten Fügekerns gebildet werden. Dieser weist 10 ringsum gleichmäßig verteilte Aussparungen auf, durch welche die zur Bildung der Scheibenelemente verwendete Masse sich aus dem einen Scheibenelement direkt in das andere Scheibenelement erstreckt. Dies bewirkt eine (zusätzliche) stoffschlüssige Verbindung der beiden Scheibenelemente, wodurch die mechanische Belastbarkeit des Rotors weiter gesteigert wird.

Die vorliegende Erfindung betrifft auch einen Fügekern für die Herstellung eines erfindungsgemäßen innenbelüfteten Rotors, wobei der Fügekern ein Gefüge aufweist, das hinreichend porös ist, oder durch Pyrolyse (z.B. Behandlung bei mindestens 400 °C in N2- Atmosphare) hinreichend porös wird, um mit einem geschmolzenen Metall oder Halbmetall,
z.B. Silicium, infiltriert werden zu können
   und
eine Oberfläche (14) aufweist, die mit der äußeren Manteloberfläche eines Hohlzylinders zusammenfällt und/oder eine Oberfläche (15) aufweist, die mit der inneren Manteloberfläche des Hohlzylinders zusammenfällt, dadurch gekennzeichnet, dass das Gefüge durch additive Fertigung erhaltet ist.

Das Gefüge, das hinreichend porös ist, um mit einem geschmolzenen Metall oder Halbmetall, z.B. Silicium, infiltriert werden zu können kann z.B. gemäß WO 2017/089494 A1, Anspruch 1, Schritte a) bis e) gebildet werden.

Ein Gefüge, das durch Pyrolyse hinreichend porös wird, um mit dem geschmolzenen Metall oder Halbmetall, z.B. Silicium, infiltriert werden zu können, kann gemäß WO 2017/089494 A1, Anspruch 1, Schritte a) bis d) gebildet werden.

Dadurch, dass der erfindungsgemäße Fügekern eine Oberfläche aufweist, die mit der äußeren Manteloberfläche eines Hohlzylinders zusammenfällt und/oder eine Oberfläche aufweist, die mit der inneren Manteloberfläche des Hohlzylinders zusammenfällt, kann der Fügekern besonders gut zur Herstellung des erfindungsgemäßen Rotors verwendet werden. Zur Herstellung des Rotors kann der Fügekern dann erfindungsgemäß besonders vorteilhaft in einer Pressform verwendet werden, die nach außen durch eine zylindrisch umlaufende Außenwand und nach innen durch eine zylindrisch umlaufende Innenwand begrenzt ist. Die Form selbst weist dann die Form des Hohlzylinders auf. Mindestens eine der erfindungsgemäßen Oberflächen des Fügekerns liegt dann an einer der Wände der Form an, so dass die Fasern und Harz enthaltende Pressmasse mit dieser Oberfläche des Fügekerns beim nachfolgenden Pressschritt nicht in Kontakt kommt.

Durch die für den erfindungsgemäßen Fügekern geforderte Oberflächengeometrie kann eine innenbelüftete Zone auf besonders elegante Weise ausgebildet werden. Dies gilt insbesondere, wenn der Fügekern einen Hohlraum aufweist und der Hohlraum zu einer der mit einer Manteloberfläche zusammenfallenden Oberfläche hin oder zu diesen beiden Oberflächen hin offen ist. Da Pressmasse mit dieser Oberfläche bzw. diesen Oberflächen des Fügekerns nicht in Kontakt kommt, kann sie über die in dieser Oberfläche bestehende Öffnung bzw. über die in diesen Oberflächen bestehenden Öffnungen des Hohlraums auch nicht in den Hohlraum gelangen. Dieser wird also durch die Pressmasse nicht verfüllt und steht später als (ein Teil der) innenbelüftete(n) Kühlzone zur Verfügung.

Der erfindungsgemäße Fügekern kann ringförmig ausgebildet sein. Ein Beispiel eines ringförmigen Fügekern ist in Figur 3 gezeigt. Dies bewirkt, dass die Fertigung des Rotors weiter vereinfacht wird, da die Gefahr eines Verrutschens des Fügekerns beim Verpressen der Pressmasse auf ein Minimum reduziert wird, so dass die Herstellung des Rotors besonders einfach und mit kleinstmöglichem Ausschuss erfolgen kann.

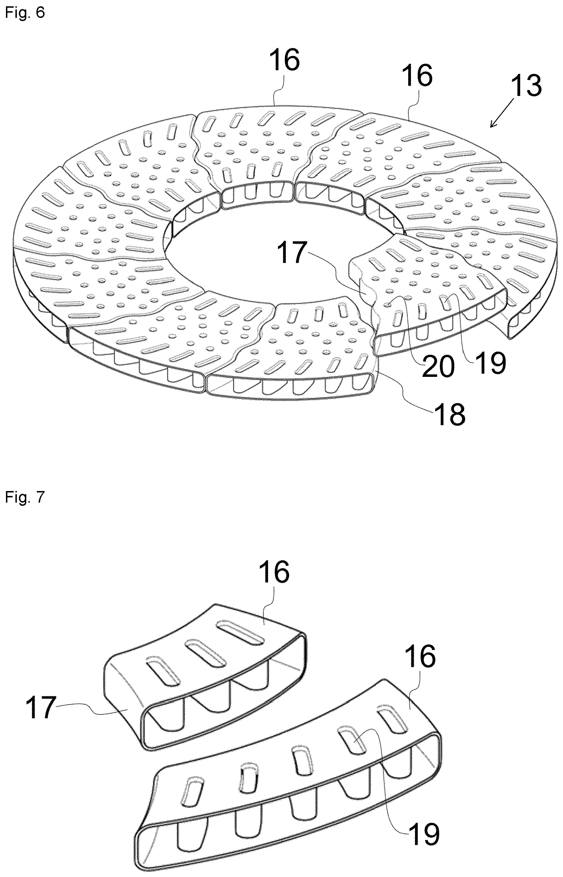

Der Fügekern kann aus Fügekernsegmenten aufgebaut sein. Dies bedeutet, dass der Fügekern in mehrere (wenigstens 2, bevorzugt wenigstens 4, besonders bevorzugt wenigstens 6, ganz besonders bevorzugt wenigstens 8, z.B. wenigstens 10; bevorzugt höchstens 100, besonders bevorzugt höchstens 50, z.B. höchstens 36) Fügekernsegmente zerlegt werden kann, ohne Fügekernmaterial zu durchtrennen. Unter Fügekernmaterial wird dabei das Material verstanden, das, wie oben definiert, hinreichend porös ist oder durch Pyrolyse hinreichend porös wird, um mit einem geschmolzenen Metall oder Halbmetall, z.B. Silicium, infiltriert werden zu können. Die Fügekernsegmente können axiale Segmente sein, wie in Figur 6 gezeigt. Dies schließt eine zusätzliche tangentiale Segmentierung nicht aus, die in Figur 7 gezeigt ist. Die Fügekernsegmente können also axiale Segmente und/oder tangentiale Segmente sein.

Vorzugsweise sind Segmentoberflächen benachbarter Segmente so geformt, dass Konturen der Segmentoberflächen ineinandergreifen. Dadurch lassen sich Fügekernsegmente gegen ein Verrutschen in radialer oder tangentialer Richtung sichern. Folglich ist der aus Fügekernsegmenten aufgebaute Fügekern leichter handhabbar und der Ausschuss bei der nachgelagerten Herstellung erfindungsgemäßer Rotoren geringer.

Segmente können z.B. wie Puzzleteile ineinandergreifen.

Benachbarte Segmente können auch Hinterschneidungen aufweisen. Eine Hinterschneidung bewirkt, dass die benachbarten Segmente miteinander verbunden werden können. Miteinander verbinden kann z.B. ein Einstecken eines Segments in ein benachbartes Segment umfassen.

Ein weiterer Vorteil besteht darin, dass Fügekernsegmente eine wirtschaftliche Ausnutzung des Druckraums des 3D-Druckers ermöglichen, z. B. durch alternierend entgegengesetzte Ausrichtung der Segmente. Mit nicht segmentierten, ringsum einstückig ausgebildeten Fügekernen, lässt sich der Druckraum nicht so gut ausnutzen. Außerdem gleichen einzelne Fügekernsegmente thermische Spannungen besser aus, da die zusammenhängenden Kontaktflächen zu angrenzenden Materialien, die andere Wärmeausdehnungskoeffizienten aufweisen, geringer sind. Folglich bewirkt die Segmentierung zugleich eine Steigerung der Effizienz bei der additiven Fügekern-Fertigung und eine Verringerung des Ausschusses bei der nachgelagerten Herstellung erfindungsgemäßer Rotoren.

Ein aus Fügekernsegmenten aufgebauter Fügekern kann zwischen Fügekernsegmenten Öffnungen aufweisen, die sich durch den Fügekern hindurch, von einer Oberfläche des Fügerkerns zur anderen Oberfläche des Fügekerns, erstrecken. Dies hat den Vorteil, dass sich diese Öffnungen bei der nachgelagerten Herstellung erfindungsgemäßer Rotoren verfüllen lassen und dadurch Scheibenelementverbindungsbereiche entstehen können, die hierin an anderer Stelle näher beschrieben sind. So lassen sich der Anteil an festeren Verbindungsbereichen und der Anteil an Wärme besser abführenden Kühlelementen gezielt einstellen, je nachdem ob für einen bestimmten, erfindungsgemäßen Rotor höhere Anforderungen an die Stabilität oder an die Kühlleistung gestellt werden.

Dies gilt gerade auch bei zusätzlicher tangentialer Segmentierung. Die mechanisch stärker belasteten Scheibenelementverbindungsbereiche lassen sich dann zwischen näher an der Rotationsache liegenden inneren Fügekernsegmenten und weiter von der Rotationsachse entfernt liegenden, äußeren Fügekernsegmenten gezielt dort bilden, wo Bremsbeläge auf den Rotor gepresst werden. Hingegen können die auf die Fügekernsegmente zurückgehenden Kühlelemente radial weiter innen und außen angeordnet werden, also dort wo die Belastung durch die aufgepressten Bremsbeläge geringer ist und somit größere Spielräum hin zu einer Optimierung der Kühlleistung bestehen.

Es ist mit geringem Aufwand möglich, die Fügekernsegmente gezielt radial innen und außen anzuordnen, indem man einen konventionellen Kern, wie z.B. den in der Patenschrift DE 102 34 400 B3 beschriebenen kompressiblen Kern, um erfindungsgemäße Fügekernsegmente ergänzt. Die Fügekernsegmente können dabei z.B. radial innen und außen einen Teil des Raumes einnehmen, der ansonsten von dem kompressiblen Kern eingenommen werden würde.

Eine radiale Segmentierung kann auf besonders einfache Weise in einem Formwerkzeug erreicht werden, das in DE 601 15 964 T2 beschrieben ist. Auf die dort beschriebenen Stiftelemente können Kernsegmente (z.B. mit Hilfe von 3D Druck erhältliche Kernsegmente) aufgesteckt werden. Die Stiftelemente werden in eine Arbeitsposition gebracht, wie in DE 601 15 964 T2 beschrieben. Die Längen und Formen von Stiftelementen und Kernsegmenten können so aufeinander abgestimmt werden, dass die Überführung der Stiftelemente in die Arbeitsposition die Kernsegmente in diejenige Position bringt, die die Kernsegmente im entstehenden Rotor bzw. Bremsbelag einnehmen sollen. Wenn die Stiftelemente in die Ruheposition zurücküberführt werden, verbleiben die Kernsegmente in der gewünschten Position. In dieser Position werden sie von der Verbundwerkstoffmischung gehalten, die in das Formwerkzeug eingepresst und darin mindestens teilweise ausgehärtet wurde. Hier wird von einem Kernsegment gesprochen, da es über die Stifte eingebracht wird und die Kernsegmente in diesem Fall selbst nicht zusammengefügt sind. Lediglich aus diesem Grund wurde die Silbe "füge" hier weggelassen.

Jedes Fügekernsegment oder Kernsegment kann eine oben näher beschriebene Kühlstruktur aufweisen. Es kann z.B. beliebige Kombinationen von Rippen, Stäben und Gittern aufweisen.

Unabhängig davon, ob der Fügekern aus Fügekernsegmenten aufgebaut ist, oder nicht, können Oberflächen des Fügekerns, insbesondere in axialer Richtung orientierte Oberflächen des Fügekerns, Fügekernvertiefungen aufweisen. Bei der Herstellung eines erfindungsgemäßen Rotors greift dann das Material der späteren Scheibenelemente in die Fügekernvertiefungen ein. Dies sorgt für eine noch festere Verbindung der Scheibenelemente mit dem auf den Fügekern zurückgehenden Kühlelement. Die Stabilität des Rotors kann folglich noch weiter gesteigert werden.

Eine Wand des Fügekerns oder Kühlelements kann gekrümmt (z.B. gebogen oder gewellt) sein. Dies hat den Vorteil, thermisch induzierte Spannungen, die im Rotor beim Bremsen oder schon bei einer Infiltration mit flüssigem Silicium beim Herstellen des Rotors auftreten können, besser ausgleichen zu können. Trotz der insgesamt sehr geringen elastischen Verformbarkeit des Kühlelementmaterials oder der Fügekernmaterials, können Krümmungen thermisch induzierte Spannungen reduzieren.

Die Erfindung betrifft auch ein Set umfassend den erfindungsgemäßen Fügekern und eine Pressform mit einer hohlzylindrischen Ausnehmung, wobei eine Oberfläche der Ausnehmung mit der äußeren Mantelfläche des Hohlzylinders zusammenfällt und eine andere Oberfläche der Ausnehmung mit der inneren Mantelfläche des Hohlzylinders zusammenfällt.

Erfindungsgemäß weist das mindestens eine Kühlelement des Rotors einen geringeren mittleren Volumenanteil an Fasern auf, als die Scheibenelemente. Vorzugsweise überschreitet der mittlere Volumenanteil an Fasern des Kühlelements nicht 40 %. Vorzugsweise unterschreitet der mittlere Volumenanteil an Fasern der Scheibenelemente nicht 20 %. Der mittlere Volumenanteil an Fasern des Kühlelements kann z.B. 0 bis 40 % betragen. Der mittlere Volumenanteil an Fasern der Scheibenelemente kann z.B. 5 bis 70 % betragen. Es zeigte sich, dass dann eine sehr hohe mechanische Belastbarkeit erzielt und Wärme zugleich besonders effizient abgeführt wird. Zur Bestimmung mittlerer Volumenanteile an Fasern schneidet man den Rotor einschließlich Scheibenelement(en) und Kühlelemente(en) durch, schleift die beim Durchschneiden erhaltenen Schnittoberflächen ab und bestimmt visuell (z.B. unter Verwendung eines Mikroskops), welchen Anteil die von Fasern eingenommenen Bereiche der Schnittoberflächen an den gesamten Schnittoberflächen einnehmen. Sind die Fasern innerhalb von Kühl- und/oder Scheibenelement nicht vollkommen homogen verteilt, so wird der Rotor einschließlich Scheibenelement(en) und Kühlelemente(en) mehrfach durchschnitten und es werden sämtliche Schnittoberflächen in die Bestimmung der jeweiligen mittleren Volumenanteile mit einbezogen.

Ein Übergang von Scheibenelementen zu Kühlelementen ist daran zu erkennen, dass im Übergang herstellungsbedingt eine andere Materialzusammensetzung vorliegt, als in den direkt angrenzenden Scheibenelementen und Kühlelementen. Dies ist darauf zurückzuführen, dass Vorläufer von Kühlelementen und Scheibenelementen im Herstellungsprozess gefügt und erst anschließend durch Metall- oder Siliciuminfiltration stoffschlüssig und fest miteinander verbunden werden. Die jeweiligen Bereiche, für die der mittlere Volumenanteil an Fasern jeweils zu bestimmen ist, sind also durch die Übergänge scharf abgegrenzt. Wenn solche scharfen Übergänge nicht vorliegen, wird zur Abgrenzung stattdessen ermittelt, an welcher Stelle der Volumenanteil an Fasern am stärksten abnimmt. Diejenigen Bereiche mit dem niedrigeren Volumenanteil an Fasern gelten dann als zum faserärmeren Kühlelement gehörig und diejenigen Bereiche mit dem höheren Volumenanteil an Fasern gelten dann als zum faserreicheren Scheibenelement gehörig.

Faser steht hierin vorzugsweise für Carbonfaser. Alternativ sind jedoch auch andere, dem Fachmann bekannte, hochtemperaturstabile Fasern denkbar.

Die zur innenbelüfteten Kühlzone hin orientierten Kühlelementoberflächen können einen höheren Anteil an Keramik, z.B. an Siliciumcarbid, haben, als die Scheibenelemente.

Scheibenelemente können Perforationsöffnungen, z.B. Perforationsbohrungen aufweisen, die sich von den Oberflächen der Scheibenelemente in die innenbelüftete Kühlzone erstrecken. Dies bewirkt, dass die Kühlleistung weiter gesteigert wird. Außerdem werden durch die Perforationsöffnungen Wasser und Abrieb auf der Reibfläche beim Bremsen in den Kühlkanal gesogen und dadurch die Reibfläche trocken und "sauber" gehalten.

An besonders bevorzugten erfindungsgemäßen Rotoren ist ein Bremsscheibentopf über mehrere, z.B. 4, 6, 8 oder 10, Befestigungspunkte angebracht. An den Befestigungspunkten ist jeweils ein Befestigungselement in den Rotor eingebracht. Jedes Befestigungselement erstreckt sich jeweils in einen Scheibenelementverbindungsbereich.

Die Erfindung betrifft auch die Verwendung des erfindungsgemäßen innenbelüfteten Rotors als Bremsscheibe für Flugzeuge, Züge, Aufzüge, Seilbahnen, Motorräder, Personenkraftwagen (PKW), Busse, Lastkraftwagen (LKW), Rennsportfahrzeuge, Quads, Multi Purpose Vehicles (MPV), All Terrain Vehicles (ATV), für industrielle Anwendungen, z.B. für Kräne oder für Papiermaschinen, als Bremsbelag, als Kupplungsscheibe, als Schleifscheibenträger, als Kühlkörper, als Pumpenimpeller und/oder als Turbinenbauteil.

Die Erfindung wird durch die nachfolgenden Figuren veranschaulicht, ohne darauf beschränkt zu sein.
- Figur 1: zeigt einen ersten erfindungsgemäßen Rotor
- Figur 1A: zeigt einen Ausschnitt aus Figur 1
- Figur 2: zeigt eine Ansicht des erfindungsgemäßen Rotors aus Figur 1, wobei ein Teil des oberen Scheibenelements 2 nicht dargestellt ist
- Figur 3: zeigt einen erfindungsgemäßen Fügekern zur Herstellung des in Figuren 1 und 2 gezeigten Rotors
- Figuren 3A und 3B: zeigen Ausschnitte aus Figur 3
- Figur 4: zeigt einen zweiten erfindungsgemäßen Rotor, wobei ein Teil des oberen Scheibenelements 2 nicht dargestellt ist
- Figur 5: zeigt einen dritten erfindungsgemäßen Rotor
- Figur 6: zeigt einen aus Segmenten aufgebauten, erfindungsgemäßen Fügekern
- Figur 7: zeigt Segmente für einen weiteren erfindungsgemäßen Fügekern

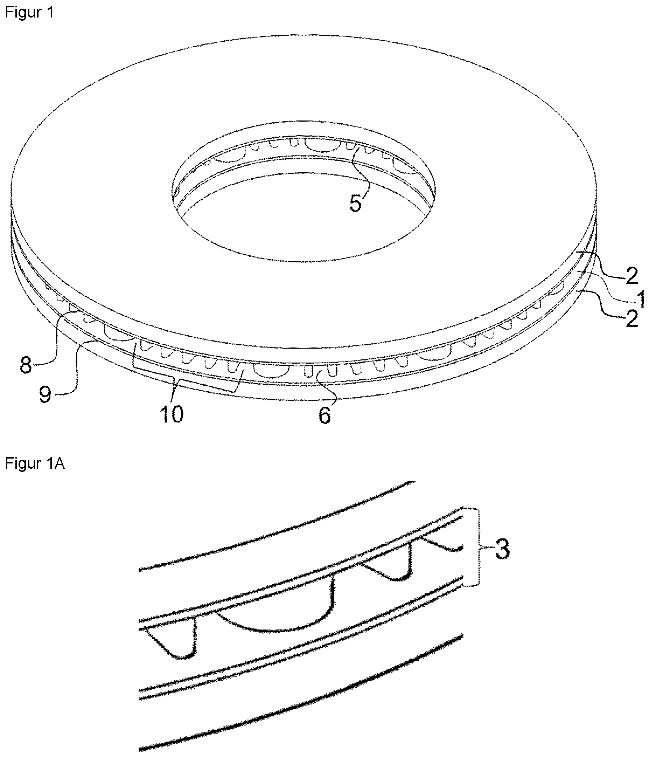

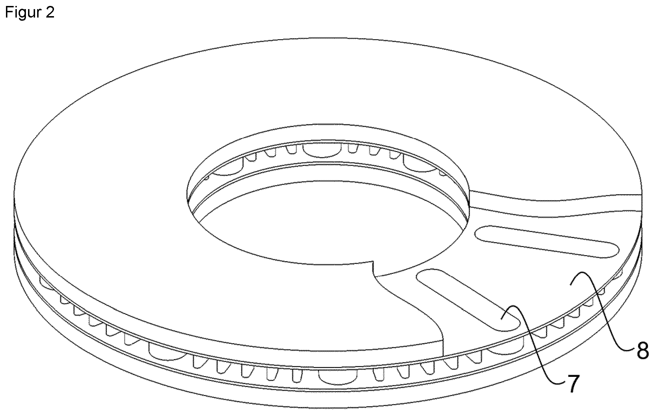

Der in Figuren 1, 1A und 2 gezeigte Rotor umfasst zwei miteinander verbundene Scheibenelemente **2,** eine innenbelüftete Kühlzone 1 zwischen den Scheibenelementen **2** und mindestens ein (mit Hilfe des in Fig. 3, 3A und 3B gezeigten Fügekerns) gebildetes Kühlelement **3.** Das Kühlelement **3** weist ein kohlenstoffbasiertes Gefüge auf, das durch 3D-Druck erhalten wurde. Die Kühlzone **1** ist in radialer Richtung nach innen und außen hin offen und umfasst eine Vielzahl an Kanälen, die jeweils durch das Kühlelement **3** von einer zur Rotationsachse näheren Kühlelementöffnung **5** zu einer von der Rotationsachse weiter entfernten Kühlelementöffnung **6** verlaufen. Der Rotor weist mehrere Kühlstrukturen **10** in Form von Rippentragwerken mit jeweils **5** beabstandeten Rippen auf, so dass die Kanäle durch Rippen der Kühlstruktur begrenzt sind. Es kann also Luft durch die Kühlzone **1** strömen. Jede Rippe stellt einen geraden Abschnitt dar, welches das Kühlelement aufweist und das von einem Scheibenelement **2** zum anderen Scheibenelement **2** gerade verläuft. Das Kühlelement **3** verbindet die Scheibenelemente **2** und ist damit so angeordnet, dass Wärme vom Kühlelement **3** direkt auf die in der Kühlzone **1** befindliche Luft übertragen werden kann.

Im Rotor der Figuren 1, 1A und 2 ist die Kühlstruktur **10** vollständig vom Kühlelement **3** umfasst. Sie erstreckt sich von einer Wand **8** des Kühlelements **3** zu einer anderen Wand **9** des Kühlelements **3,** wobei das Kühlelement **3** über je eine der Wände **8, 9** mit je einem der Scheibenelemente **2** verbunden ist. Das Verhältnis der Innenoberfläche des Rotors zur Außenoberfläche des Rotors beträgt mehr als 1,5 : 1. Der in Figuren 1, 1A und 2 gezeigte Rotor weist zehn Scheibenelementverbindungsbereiche **7** auf, die die Scheibenelemente **2** ebenfalls verbinden.

Abweichend vom Rotor der Figuren 1 und 2 ist beim Rotor der Figur 4 und beim Rotor der Figur 5 die Kühlstruktur **10** ein Stabtragwerk. Das Stabtragwerk ist jeweils unter Beteiligung von einer Vielzahl von Kühlelementen **3** und den beiden Scheibenelementen **2** gebildet. Die Scheibenelemente bilden die Gurte auf den beiden Seiten des jeweiligen Stabtragwerks.

Beim Rotor der Figur 4 sind die Kühlelemente parallel zueinander und parallel zur Rotationsachse ausgerichtete Stäbe, die sich untereinander nicht berühren oder kreuzen und auch ohne 3D-Druck problemlos herstellbar sind. Das Verhältnis der Innenoberfläche des Rotors zur Außenoberfläche des Rotors beträgt mehr als 1,5 : 1.

Beim Rotor der Figur 5 besteht das Stabtragwerk aus einer Vielzahl sich kreuzender Stäbe, die alternierend relativ zur Rotationsachse um 45° bzw. um -45° geneigt sind. Das Verhältnis der Innenoberfläche des Rotors zur Außenoberfläche des Rotors beträgt über 3 : 1.

Bei den drei in den Figuren gezeigten Rotoren sind die Scheibenelemente Siliciumcarbidcarbonfaserverbund-Reibscheiben und die Kühlelemente sind Siliciumcarbid-Kühlelemente. Sämtliche Kühlelemente **3** weisen also einen geringeren mittleren Volumenanteil an Fasern auf, als die Scheibenelemente **2.**

Figur 3 zeigt einen ringförmig ausgebildeten Fügekern **13** für die Herstellung eines in Figuren 1 und 2 gezeigten, erfindungsgemäßen Rotors. Der Fügekern **13** ist nach WO 2017/089494 A1, Anspruch 1, Schritte a) bis d) gebildet und weist ein Gefüge auf, das durch Pyrolyse hinreichend porös wird, um mit Silicium infiltriert werden zu können. Der Fügekern **13** weist eine Oberfläche **14** auf, die mit der äußeren Manteloberfläche eines Hohlzylinders zusammenfällt und eine Oberfläche **15** auf, die mit der inneren Manteloberfläche des Hohlzylinders zusammenfällt (siehe Figuren 3A, 3B). Der Hohlzylinder ist in Figur 3 gestrichelt dargestellt. Fügekern **13** weist einen Hohlraum auf. Der Hohlraum ist zu den beiden Oberflächen **14, 15** hin offen. In dem hier gezeigten Fall sind die Öffnungen des Hohlraums in die Oberflächen **14, 15** so groß, dass von den Oberflächen **14, 15** nur noch die beiden Ränder bestehen, die in Figuren 3A und 3B gut zu sehen sind.

Figur 6 zeigt eine andere Ausführungsform des ringförmig ausgebildeten Fügekerns **13.** Dieser ist aus Fügekernsegmenten **16** aufgebaut. Zur Veranschaulichung der Form der einzelnen Fügekernsegmente ist eines der Fügekernsegmente außerhalb der Ebene des Fügekerns dargestellt. Bei der hier gezeigten Ausführungsform weist jedes Fügekernsegment eine erste Segmentoberfläche **17** und eine zweite Segmentoberfläche **18** auf. Beide Segmentoberflächen sind so geformt, dass Konturen beider Segmentoberflächen ineinandergreifen. Dies stabilisiert die Fügekernsegmente **16** gegen ein Verrutschen in radialer oder tangentialer Richtung. In dem hier gezeigten Beispiel weisen beide Segmentoberflächen **17, 18** konvexe und konkave Bereiche auf. Konvexe Bereiche der ersten Segmentoberfläche **17** eines Fügekernsegments **16** greifen in konkave Bereiche einer zweiten Segmentoberfläche **18** eines direkt benachbarten Fügekernsegments 16 ein, und umgekehrt. Die beiden in der Figur nach oben und unten, in axialer Richtung orientierten Oberflächen weisen zudem längliche Fügekernvertiefungen **19** und runde Fügekernvertiefungen **20** auf. Die Anordnung von Vertiefungen ober- und unterhalb von Rippen oder Stäben hat den Vorteil, dass die Wandstärke im Bereich des Übergangs in die Rippe im Wesentlichen gleich dick gehalten werden kann wie in anderen Wandbereichen des Kühlelements. Die Verminderung von Materialanhäufungen begünstigt eine Wärmeausdehnungskompensation zwischen den Materialien und reduziert somit innere Spannungen.

Die in Figur 7 gezeigten, größeren und kleineren Fügekernsegmente **16** sind abgeleitet von radial außen- und innenliegenden Bereichen der Fügekernsegmente, die in Figur **6** gezeigt sind. Während der in Figur 6 gezeigte Fügekern 13 axial segmentiert ist, kann eine zusätzliche Segmentierung in radialer Richtung erfolgen, die in Figur 7 angedeutet ist. In erfindungsgemäßen Rotoren können die kleineren Fügekernsegmente **16** also zur Rotationsachse nähere Kühlelementöffnungen definieren. Die größeren Fügekernsegmente **16** können von der Rotationsachse weiter entfernte Kühlelementöffnung definieren.

### Bezugszeichenliste

- 1: Innenbelüftete Kühlzone
- 2: Scheibenelement
- 3: Kühlelement
- 5: zur Rotationsachse nähere Kühlelementöffnung
- 6: von der Rotationsachse weiter entfernte Kühlelementöffnung
- 7: Scheibenelementverbindungsbereich
- 8, 9: Wände des Kühlelements
- 10: Kühlstruktur
- 13: Fügekern
- 14: Oberfläche, die mit der äußeren Manteloberfläche eines Hohlzylinders zusammenfällt
- 15: Oberfläche, die mit der inneren Manteloberfläche eines Hohlzylinders zusammenfällt
- 16: Fügekernsegment
- 17: erste Segmentoberfläche
- 18: zweite Segmentoberfläche
- 19: längliche Fügekernvertiefungen
- 20: runde Fügekernvertiefungen

## Patentansprüche

1. Innenbelüfteter Rotor umfassend zwei miteinander verbundene Scheibenelemente (2) und einen Fügekern (13) mit einer innenbelüfteten Kühlzone (1) und einem Kühlelement (3) zwischen den Scheibenelementen , wobei das Kühlelement (3) die Scheibenelemente verbindet, damit Wärme vom Kühlelement (3) direkt auf die in der Kühlzone (1) befindliche Luft übertragen wird, und wobei die Scheibenelemente und das Kühlelement (3) Fasern enthält, wobei das Kühlelement (3) einen geringeren mittleren Volumenanteil an Fasern aufweist als die Scheibenelemente (2), und wobeidie Kühlzone (1) in radialer Richtung nach innen und außen hin offen ist, so dass Luft durch die Kühlzone (1) strömen kann, **dadurch gekennzeichnet dass** der Fügekern (13) ein Gefüge aufweist, das durch additive Fertigung erhalten ist .

2. Innenbelüfteter Rotor nach Anspruch 1, wobei das Kühlelement (3) mindestens einen von einem Scheibenelement (2) zum anderen Scheibenelement (2) gerade verlaufenden Abschnitt aufweist, der parallel oder geneigt zur Rotationsachse ausgerichtet ist.

3. Innenbelüfteter Rotor nach Anspruch 1, wobei der mittlere Volumenanteil an Fasern des Kühlelements (3) 0 bis 40 % beträgt und/oder der mittlere Volumenanteil an Fasern des Scheibenelements (2) oder der Scheibenelemente (2) 5 bis 70 % beträgt.

4. Innenbelüfteter Rotor nach Anspruch 1, wobei das Kühlelement (3) ein durch additive Fertigung, z.B. durch 3D-Druck, erhältliches Gefüge umfasst.

5. Innenbelüfteter Rotor nach Anspruch 1, wobei die Kühlzone (1) einen Kanal umfasst, der durch das Kühlelement (3) von einer zur Rotationsachse näheren Kühlelementöffnung (5) zu einer von der Rotationsachse weiter entfernten Kühlelementöffnung (6) verläuft.

6. Innenbelüfteter Rotor nach Anspruch 1, aufweisend eine Kühlstruktur (10), ausgewählt unter Stabtragwerken, Rippentragwerken, und/oder Gittern.

7. Innenbelüfteter Rotor nach Anspruch 6, wobei die Kühlstruktur (10) vollständig vom Kühlelement (3) umfasst ist und sich z.B. von einer Wand (8) des Kühlelements (3) zu einer anderen Wand (9) des Kühlelements (3) erstreckt, wobei das Kühlelement (3) über je eine der Wände (8, 9) mit je einem der Scheibenelemente (2) verbunden ist.

8. Innenbelüfteter Rotor nach Anspruch 6, wobei die Kühlstruktur (10) unter Beteiligung von einer Vielzahl von Kühlelementen (3) und den beiden Scheibenelementen (2) gebildet ist, wobei die Kühlelemente (3) die Scheibenelemente (2) verbinden.

9. Innenbelüfteter Rotor (1) nach Anspruch 1 , wobei das Verhältnis der (zur Kühlung zur Verfügung stehenden) Innenoberfläche des Rotors zur (zum Bremsen zur Verfügung stehenden) Außenoberfläche des Rotors mindestens 1:1 beträgt.

10. Innenbelüfteter Rotor (1) nach Anspruch 1, aufweisend einen Scheibenelementverbindungsbereich (7), der die Scheibenelemente (2) verbindet, wobei der mittlere Volumenanteil an Fasern im Scheibenelementverbindungsbereich (7) dem mittleren Volumenanteil an Fasern der Scheibenelemente (2) entspricht.

11. Fügekern (13) für die Herstellung eines innenbelüfteten Rotors nach einem der vorhergehenden Ansprüche, wobei der Fügekern (13) ein Gefüge aufweist, das porös ist oder durch Pyrolyse porös wird, um mit einem geschmolzenen Metall oder Halbmetall, z.B. Silicium, infiltriert werden zu können und eine Oberfläche (14) aufweist, die mit der äußeren Manteloberfläche eines Hohlzylinders zusammenfällt und/oder eine Oberfläche (15) aufweist, die mit der inneren Manteloberfläche des Hohlzylinders zusammenfällt, **dadurch gekennzeichnet, dass** das Gefüge durch additive Fertigung erhalten ist.

12. Fügekern (13) nach Anspruch 11, aufweisend einen Hohlraum, wobei der Hohlraum zu einer der Oberflächen (14, 15) hin oder zu diesen beiden Oberflächen (14, 15) hin offen ist.

13. Verwendung des innenbelüfteten Rotors nach einem der Ansprüche 1 bis 10 als Bremsscheibe für Flugzeuge, Züge, Aufzüge, Seilbahnen, Motorräder, Personenkraftwagen (PKW), Busse, Lastkraftwagen (LKW), Rennsportfahrzeuge, Quads, Multi Purpose Vehicles (MPV), All Terrain Vehicles (ATV), für industrielle Anwendungen, z.B. für Kräne oder für Papiermaschinen, als Bremsbelag, als Kupplungsscheibe, als Schleifscheibenträger, als Kühlkörper, als Pumpenimpeller und/oder als Turbinenbauteil.

## Claims

1. Internally ventilated rotor comprising at least two disc elements (2) connected to one another and a joining core (13) with an internally ventilated cooling zone (1) and a cooling element (3) between the disc elements, wherein the cooling element (3) connects the disc elements, in such a way that heat is directly transferred from the cooling element (3) to the air in the cooling zone (1), and wherein the disc elements and the cooling element (3) contains fibers, the cooling element (3) having a lower average volume fraction of fibers than the disc elements (2), and wherein the cooling zone (1) is open in the radial direction inwards and outwards, so that air can flow through the cooling zone (1), **characterized in that** the joining core (13) has a structure that is produced by additive manufacturing.

2. Internally ventilated rotor according to claim 1, wherein the cooling element (3) has at least one section which runs straight from one disc element (2) to the other disc element (2) and is oriented parallel or inclined to the axis of rotation.

3. Internally ventilated rotor according to claim 1, wherein the mean volume fraction of fibers of the cooling element (3) is 0 to 40% and/or the mean volume fraction of fibers of the disc element (2) or the disc elements (2) is 5 to 70%.

4. Internally ventilated rotor according to claim 1, wherein the cooling element (3) comprises a structure obtainable by additive manufacturing, for example by 3D printing.

5. Internally ventilated rotor according to claim 1, wherein the cooling zone (1) comprises a channel which runs through the cooling element (3) from a cooling element opening (5) closer to the axis of rotation to a cooling element opening (6) further away from the axis of rotation.

6. Internally ventilated rotor according to claim 1, having a cooling structure (10) selected from bar structures, rib structures, and/or grids.

7. Internally ventilated rotor according to claim 6, wherein the cooling structure (10) is completely surrounded by the cooling element (3) and extends, for example, from one wall (8) of the cooling element (3) to another wall (9) of the cooling element (3), wherein the cooling element (3) is connected to one of the disc elements (2) via one of the walls (8, 9).

8. Internally ventilated rotor according to claim 6, wherein the cooling structure (10) is formed with the participation of a plurality of cooling elements (3) and the two disc elements (2), the cooling elements (3) connecting the disc elements (2).

9. Internally ventilated rotor (1) according to claim 1, wherein the ratio of the inner surface of the rotor (available for cooling) to the outer surface of the rotor (available for braking) is at least 1:1.

10. Internally ventilated rotor (1) according to claim 1, having a disc element connection area (7) which connects the disc elements (2), wherein the mean volume fraction of fibers in the disc element connection area (7) corresponds to the mean volume fraction of fibers in the disc elements (2).

11. Joining core (13) for the production of an internally ventilated rotor according to one of the preceding claims, wherein the joining core (13) has a structure that is porous or becomes porous by pyrolysis to be infiltrated with a molten metal or semi-metal, e.g. silicon, and has a surface (14) which coincides with the outer jacket surface of a hollow cylinder and/or has a surface (15) which coincides with the inner jacket surface of the hollow cylinder, **characterized in that** the structure is produced by additive manufacturing.

12. Joining core (13) according to claim 11, having a cavity, the cavity being open towards one of the surfaces (14, 15) or towards these two surfaces (14, 15).

13. Use of the internally ventilated rotor according to one of claims 1 to 10 as a brake disc for aircraft, trains, elevators, cable cars, motorcycles, passenger cars (cars), buses, trucks (lorries), racing vehicles, quads, multi-purpose vehicles (MPV), all-Terrain Vehicles (ATV), for industrial applications, e.g. for cranes or for paper machines, as a brake lining, as a clutch disc, as a grinding wheel carrier, as a heat sink, as a pump impeller and/or as a turbine component.

## Revendications

1. Rotor à ventilation interne comprenant au moins deux éléments à disque (2) reliés entre eux et un noyau de jonction (13) comportant une zone de refroidissement à ventilation interne (1) et un élément de refroidissement (3) situé entre les éléments à disque, dans lequel l'élément de refroidissement (3) relie les éléments à disque de telle sorte que la chaleur soit transférée directement de l'élément de refroidissement (3) vers l'air présent dans la zone de refroidissement (1), et dans lequel les éléments à disque et l'élément de refroidissement (3) contiennent des fibres, l'élément de refroidissement (3) présentant une fraction volumique moyenne de fibres inférieure à celle des éléments à disque (2), et dans lequel la zone de refroidissement (1) est ouverte dans la direction radiale vers l'intérieur et vers l'extérieur, de sorte que l'air peut s'écouler à travers la zone de refroidissement (1), **caractérisé en ce que** le noyau de jonction (13) présente une structure produite par fabrication additive.

2. Rotor à ventilation interne selon la revendication 1, dans lequel l'élément de refroidissement (3) présente au moins une section qui s'étend en ligne droite d'un élément à disque (2) à l'autre élément à disque (2) et qui est orientée parallèlement ou en biais par rapport à l'axe de rotation.

3. Rotor à ventilation interne selon la revendication 1, dans lequel la fraction volumique moyenne de fibres de l'élément de refroidissement (3) est comprise entre 0 et 40% et/ou la fraction volumique moyenne de fibres de l'élément à disque (2) ou des éléments à disque (2) est comprise entre 5 et 70%.

4. Rotor à ventilation interne selon la revendication 1, dans lequel l'élément de refroidissement (3) comprend une structure pouvant être obtenue par fabrication additive, par exemple par impression 3D.

5. Rotor à ventilation interne selon la revendication 1, dans lequel la zone de refroidissement (1) comprend un canal qui traverse l'élément de refroidissement (3) depuis une ouverture (5) de l'élément de refroidissement située plus près de l'axe de rotation vers une ouverture (6) de l'élément de refroidissement située plus loin de l'axe de rotation.

6. Rotor à ventilation interne selon la revendication 1, comportant une structure de refroidissement (10) choisie parmi des structures à barres, des structures à nervures et/ou des grilles.

7. Rotor à ventilation interne selon la revendication 6, dans lequel la structure de refroidissement (10) est entièrement entourée par l'élément de refroidissement (3) et s'étend, par exemple, d'une paroi (8) de l'élément de refroidissement (3) à une autre paroi (9) de l'élément de refroidissement (3), l'élément de refroidissement (3) étant relié à l'un des éléments à disque (2) par l'intermédiaire de l'une des parois (8, 9).

8. Rotor à ventilation interne selon la revendication 6, dans lequel la structure de refroidissement (10) est formée avec la participation d'une pluralité d'éléments de refroidissement (3) et des deux éléments à disque (2), les éléments de refroidissement (3) reliant les éléments à disque (2).

9. Rotor à ventilation interne (1) selon la revendication 1, dans lequel le rapport entre la surface interne du rotor (disponible pour le refroidissement) et la surface externe du rotor (disponible pour le freinage) est d'au moins 1:1.

10. Rotor à ventilation interne (1) selon la revendication 1, présentant une zone de raccordement (7) des éléments à disque qui relie lesdits éléments à disque (2), dans lequel la fraction volumique moyenne de fibres dans la zone de raccordement (7) des éléments à disque correspond à la fraction volumique moyenne de fibres dans les éléments à disque (2).

11. Noyau de jonction (13) pour la production d'un rotor à ventilation interne selon l'une des revendications précédentes, dans lequel le noyau de jonction (13) présente une structure poreuse ou qui devient poreuse par pyrolyse afin d'être infiltré d'un métal ou d'un semi-métal fondu, par exemple du silicium, et présente une surface (14) qui coïncide avec la surface extérieure de l'enveloppe d'un cylindre creux et/ou une surface (15) qui coïncide avec la surface intérieure de l'enveloppe du cylindre creux, **caractérisé en ce que** la structure est produite par fabrication additive.

12. Noyau de jonction (13) selon la revendication 11, présentant une cavité, la cavité étant ouverte vers l'une des surfaces (14, 15) ou vers ces deux surfaces (14, 15).

13. Utilisation du rotor à ventilation interne selon l'une des revendications 1 à 10 en tant que disque de frein pour les avions, les trains, les ascenseurs, les téléphériques, les motos, les voitures particulières (voitures), autobus, camions, véhicules de course, quads, véhicule multi-usage (MPV), véhicules tout-terrain (ATV), pour des applications industrielles, par exemple pour des grues ou des machines à papier, en tant que garniture de frein, disque d'embrayage, support de meule, dissipateur thermique, roue de pompe et/ou composant de turbine.
